# EUROPEAN PATENT APPLICATION

(11) **EP 3 236 528 A1**
(43) Date of publication of application: **25.10.2017**
(21) Application number: 15869636.9
(22) Date of filing: 09.10.2015
(51) Int. Cl.: H01M 10/052, H01M 4/505, H01M 4/525, H01M 4/587, H01M 10/0567

(54) **LITHIUM ION SECONDARY BATTERY**

(30) Priority: 19.12.2014 JP 2014256840
(71) Applicant: NEC Energy Devices, Ltd., Chuo-ku Sagamihara-shi Kanagawa 252-5298 (JP)
(72) Inventor: KANEKO, Shinako, Sagamihara-shi Kanagawa 252-5298 (JP); TAMAI, Suguru, Sagamihara-shi Kanagawa 252-5298 (JP)
(74) Representative: Vossius & Partner Patentanwälte Rechtsanwälte mbB
(86) International application number: PCT/JP2015/078720
(87) International publication number: WO 2016/098428

(57) **Abstract**

The present invention is a lithium-ion secondary battery including: a positive electrode containing a positive electrode active material; and an electrolyte solution containing a supporting electrolyte and a non-aqueous solvent, wherein the positive electrode active material contains a lithium-nickel composite oxide, and the electrolyte solution further contains vinylene carbonate (VC), fluoroethylene carbonate (FEC), and a boron complex of the formula (1). The content of the VC in the electrolyte solution is more than 0 mass% and 2.5 mass% or less, the content of the FEC in the electrolyte solution is more than 0 mass% and 2.0 mass% or less, the content of the boron complex of the formula (1) in the electrolyte solution is more than 0 mass% and 1.0 mass% or less, and the total content of the VC, the FEC, and the boron complex of the formula (1) in the electrolyte solution is less than 4.5 mass%. 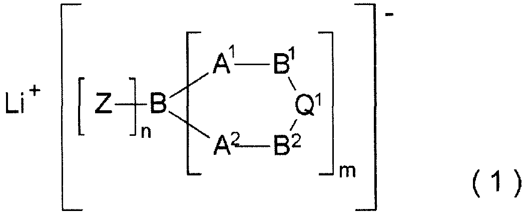 (Z, A¹, A², B¹, B², and Q¹ in the formula (1) are as defined in the description.)

## Description

### Technical Field

The present invention relates to a lithium-ion secondary battery.

### Background Art

Size reduction in electronic devices has created a demand for high-performance batteries, and lithium-ion secondary batteries have been attracting attention as batteries having high energy density. In addition, incorporation of an additive into an electrolyte solution has been studied to improve the cycle characteristics of lithium-ion secondary batteries.

Patent Literature 1 discloses an electrolyte containing an additive which is reduced and passivated at a potential above 0.3 V versus Li/Li⁺. The following are mentioned as examples of such a compound: lithium hexafluorophosphate (LiPF₆), lithium bis(oxalato)borate (LiBOB), lithium perchlorate (LiClO₄), and lithium hexafluoroarsenate (LiAsF₆).

Patent Literature 2 discloses a non-aqueous electrolyte composition containing a non-aqueous solvent and further containing a sulfone derivative and an oxalate complex salt having at least any one selected from the group consisting of boron, aluminum, gallium, phosphorus, arsenic, and antimony, as a central ion or central atom.

Patent Literature 3 discloses a non-aqueous electrolyte solution containing a boron-containing compound represented by a predetermined formula and a cyclic sulfonic acid ester.

Patent Literature 4 discloses an electrolyte containing a vinyl group-containing cyclic carbonate and a fluorinated cyclic carbonate.

### Citation List

### Patent Literature

Patent Literature 1: JP4610490B
Patent Literature 2: JP2008-004503A
Patent Literature 3: JP2012-243461A
Patent Literature 4: JP2012-527740A

### Summary of Invention

### Technical Problem

As thus far described, electrolyte solutions containing a specific additive have been disclosed. Such an additive typically forms a SEI (Solid Electrolyte Interface) film on an electrode. This SEI film is thought to be capable of inhibiting decomposition of electrolyte solution components. However, the present inventors have found that a satisfactory effect may not be obtained depending on the composition of the electrolyte solution or on the electrode active materials.

It is therefore an object of the present invention to provide a lithium-ion secondary battery capable of forming a good SEI film and having a high capacity retention ratio.

### Solution to Problem

The present invention is a lithium-ion secondary battery including: a positive electrode including a positive electrode active material; and an electrolyte solution including a supporting electrolyte and a non-aqueous solvent, wherein
the positive electrode active material includes a lithium-nickel composite oxide,
the electrolyte solution further includes vinylene carbonate (VC), fluoroethylene carbonate (FEC), and a boron complex of the formula (1) given below,
the content of the VC in the electrolyte solution is more than 0 mass% and 2.5 mass% or less,
the content of the FEC in the electrolyte solution is more than 0 mass% and 2.0 mass% or less,
the content of the boron complex of the formula (1) in the electrolyte solution is more than 0 mass% and 1.0 mass% or less, and
the total content of the VC, the FEC, and the boron complex of the formula (1) in the electrolyte solution is less than 4.5 mass%.

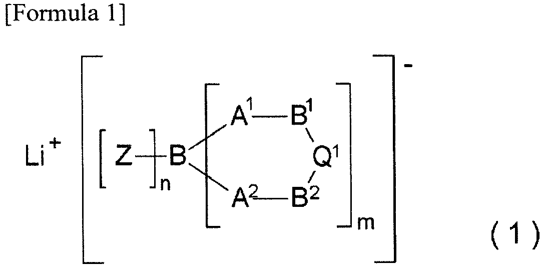

In the formula (1), Z represents a halogen atom, a substituted or unsubstituted alkyl group having 1 to 10 carbon atoms, a polyfluoroalkyl group having 1 to 10 carbon atoms, a substituted or unsubstituted cyclic hydrocarbon having 4 to 20 carbon atoms, or XR¹, wherein X represents an oxygen atom, a sulfur atom, or NR², R² represents a hydrogen atom or a substituted or unsubstituted alkyl group having 1 to 10 carbon atoms, and R¹ represents a substituted or unsubstituted cyclic hydrocarbon having 4 to 20 carbon atoms; A¹ and A² each independently represent an oxygen atom or a sulfur atom, or A¹ and A² respectively represent NR³ and NR⁴, wherein R³ and R⁴ each independently represent a hydrogen atom, a halogen atom, a substituted or unsubstituted alkyl group having 1 to 10 carbon atoms, a polyfluoroalkyl group having 1 to 10 carbon atoms, or a substituted or unsubstituted cyclic hydrocarbon having 4 to 20 carbon atoms, and R³ and R⁴ are optionally linked together to form a ring structure; B¹ and B² each independently represent a carbonyl group, a substituted or unsubstituted alkylene group, or a polyfluoroalkylene group; Q¹ represents a methylene group or a single bond; m represents 1 or 2; n represents 0 or 2; and 2m + n = 4.

### Advantageous Effects of Invention

The present invention makes it possible to provide a lithium-ion secondary battery capable of forming a good SEI film and having a high capacity retention ratio.

### Brief Description of Drawing

[Fig. 1] Fig. 1 is a schematic diagram showing the configuration of a positive electrode according to an example.
[Fig. 2] Fig. 2 is a schematic diagram showing the configuration of a negative electrode according to an example.
[Fig. 3] Fig. 3 is a schematic cross-sectional view showing the configuration of a lithium-ion secondary battery according to an example.

### Description of Embodiments

An exemplary embodiment will now be described.

A lithium-ion secondary battery according to the exemplary embodiment is a lithium-ion secondary battery including: a positive electrode containing a positive electrode active material; and an electrolyte solution containing a supporting electrolyte and a non-aqueous solvent. The positive electrode active material contains a lithium-nickel composite oxide. The electrolyte solution further contains vinylene carbonate (also referred to as VC), fluoroethylene carbonate (also referred to as FEC), and a boron complex of the formula (1) given below. The content of the VC in the electrolyte solution is more than 0 mass% and 2.5 mass% or less, the content of the FEC in the electrolyte solution is more than 0 mass% and 2.0 mass% or less, the content of the boron complex of the formula (1) in the electrolyte solution is more than 0 mass% and 1.0 mass% or less, and the total content of the VC, the FEC, and the boron complex of the formula (1) in the electrolyte solution is less than 4.5 mass%.

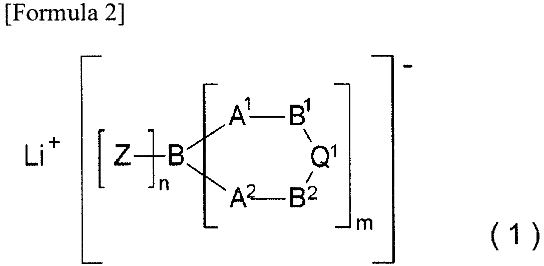

In the formula (1), Z represents a halogen atom, a substituted or unsubstituted alkyl group having 1 to 10 carbon atoms, a polyfluoroalkyl group having 1 to 10 carbon atoms, a substituted or unsubstituted cyclic hydrocarbon having 4 to 20 carbon atoms, or XR¹, wherein X represents an oxygen atom, a sulfur atom, or NR², R² represents a hydrogen atom or a substituted or unsubstituted alkyl group having 1 to 10 carbon atoms, and R¹ represents a substituted or unsubstituted cyclic hydrocarbon having 4 to 20 carbon atoms. A¹ and A² each independently represent an oxygen atom or a sulfur atom, or A¹ and A² respectively represent NR³ and NR⁴, wherein R³ and R⁴ each independently represent a hydrogen atom, a halogen atom, a substituted or unsubstituted alkyl group having 1 to 10 carbon atoms, a polyfluoroalkyl group having 1 to 10 carbon atoms, or a substituted or unsubstituted cyclic hydrocarbon having 4 to 20 carbon atoms, and R³ and R⁴ are optionally linked together to form a ring structure. B¹ and B² each independently represent a carbonyl group, a substituted or unsubstituted alkylene group, or a polyfluoroalkylene group. Q¹ represents a methylene group or a single bond, m represents 1 or 2, n represents 0 or 2, and 2m + n = 4.

The configuration of the exemplary embodiment makes it possible to obtain a lithium-ion secondary battery capable of forming a good SEI film on an electrode and consequently having a high capacity retention ratio.

Hereinafter, the components of the exemplary embodiment will be individually described.

### [1] Electrolyte solution

The electrolyte solution according to the exemplary embodiment contains a supporting electrolyte and a non-aqueous solvent and further contains vinylene carbonate (VC), fluoroethylene carbonate (FEC), and a boron complex of the above formula (1) as additives.

### <Additives>

The content of the VC in the electrolyte solution is more than 0 mass% and 2.5 mass% or less. The content of the FEC in the electrolyte solution is more than 0 mass% and 2.0 mass% or less. The content of the boron complex of the formula (1) in the electrolyte solution is more than 0 mass% and 1.0 mass% or less. The total content of the VC, the FEC, and the boron complex of the formula (1) in the electrolyte solution is less than 4.5 mass%. When these conditions are satisfied, a good SEI film can be formed on an electrode, in particular on a positive electrode. If the content of the VC is more than 2.5 mass%, the battery resistance will be high. If the content of the FEC is more than 2.0 mass%, the amount of gas generated during charging/discharging will be large so that the cycle characteristics will deteriorate. If the content of the boron complex of the formula (1) is more than 1.0 mass%, the amount of gas generated during charging/discharging will be large and, in addition, the battery resistance will be high. If the total content of the VC, the FEC, and the boron complex of the formula (1) in the electrolyte solution is 4.5 mass% or more, the amount of the additives in the electrolyte solution is excessive so that the capacity retention ratio will tend to decrease.

The content of the VC in the electrolyte solution is preferably 0.1 mass% or more, more preferably 0.5 mass% or more, and even more preferably 1.0 mass% or more.

The content of the FEC in the electrolyte solution is preferably 0.1 mass% or more, more preferably 0.5 mass% or more, and even more preferably 1.0 mass% or more.

The content of the boron complex of the formula (1) in the electrolyte solution is preferably 0.01 mass% or more, more preferably 0.05 mass% or more, and even more preferably 0.1 mass% or more.

The total content of the VC, the FEC, and the boron complex of the formula (1) in the electrolyte solution is preferably 1.0 mass% or more, more preferably 1.5 mass% or more, and even more preferably 2.0 mass% or more.

The boron complex of the formula (1) is preferably lithium bis(oxalato)borate (LiBOB) represented by the following formula (1A).

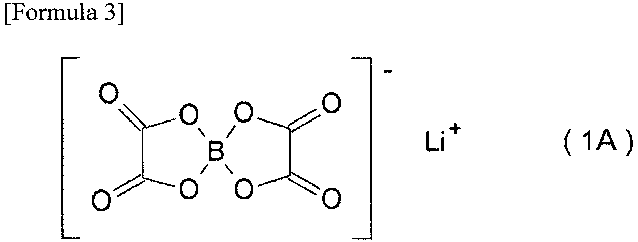

### <Non-aqueous solvent>

Examples of the non-aqueous solvent include, but are not limited to, non-fluorinated carbonates such as cyclic carbonates other than the VC and chain carbonates. Examples of the non-aqueous solvent further include aliphatic carboxylic acid esters, γ-lactones, cyclic ethers, chain ethers, and fluorinated derivatives thereof. These can be used alone or in combination with one another.

Examples of the non-fluorinated cyclic carbonates other than the VC include propylene carbonate (PC), ethylene carbonate (EC), and butylene carbonate (BC). It is preferable for the cyclic carbonates to have no unsaturated bonds such as a vinyl bond.

Examples of the non-fluorinated chain carbonates include dimethyl carbonate (DMC), diethyl carbonate (DEC), ethyl methyl carbonate (EMC), and dipropyl carbonate (DPC).

Examples of the aliphatic carboxylic acid esters include methyl formate, methyl acetate, and ethyl propionate.

Examples of the γ-lactones include γ-butyrolactone.

Examples of the cyclic ethers include tetrahydrofuran and 2-methyltetrahydrofuran.

Examples of the chain ethers include 1,2-diethoxyethane (DEE) and ethoxymethoxyethane (EME).

Other examples of the non-aqueous solvent include dimethyl sulfoxide, 1,3-dioxolane, formamide, acetamide, dimethylformamide, acetonitrile, propionitrile, nitromethane, ethyl monoglyme, phosphate triesters, trimethoxymethane, dioxolane derivatives, sulfolane, methylsulfolane, 1,3-dimethyl-2-imidazolidinone, 3-methyl-2-oxazolidinone, propylene carbonate derivatives, tetrahydrofuran derivatives, ethyl ethers, N-methylpyrrolidone, fluorinated carboxylic acid esters, methyl-2,2,2-trifluoroethyl carbonate, methyl-2,2,3,3,3-pentafluoropropyl carbonate, trifluoromethyl ethylene carbonate, monofluoromethyl ethylene carbonate, difluoromethyl ethylene carbonate, 4,5-difluoro-1,3-dioxolan-2-one, and monofluoroethylene carbonate. These can be used alone or in combination with one another.

It is preferable for the non-aqueous solvent to contain a non-fluorinated carbonate. Examples of the non-fluorinated carbonate include non-fluorinated cyclic carbonates other than the VC, and non-fluorinated chain carbonates. Non-fluorinated carbonates have an advantage of increasing the degree of ionic dissociation of the electrolyte solution because of its high relative permittivity, and at the same time, have an advantage of providing an improvement in ionic mobility by decreasing the viscosity of the electrolyte solution. The content of the non-fluorinated carbonate in the electrolyte solution is, for example, 30 mass% or more, preferably 50 mass% or more, and more preferably 70 mass% or more.

### <Supporting electrolyte>

Examples of the supporting electrolytes include, but are not limited to, lithium salts such as LiPF₆, LiAsF₆, LiAlCl₄, LiClO₄, LiBF₄, LiSbF₆, LiCF₃SO₃, LiC₄F₉SO₃, Li(CF₃SO₂)₂, and LiN(CF₃SO₂)₂. The supporting electrolytes can be used alone or in combination with one another.

The concentration of the supporting electrolyte in the electrolyte solution is preferably 0.5 to 1.5 mol/l. When the concentration of the supporting electrolyte is in this range, the density, viscosity, electrical conductivity etc. can easily be adjusted to appropriate ranges.

### <Cyclic sulfonyl compound>

It is preferable for the electrolyte solution to contain a cyclic sulfonyl compound represented by the following formula (2).

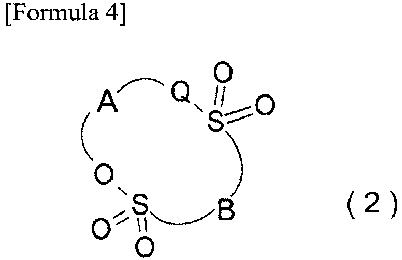

In the formula (2), Q represents an oxygen atom, a methylene group, or a single bond, A represents a linear or branched alkylene group having 1 to 6 carbon atoms, a carbonyl group, a sulfinyl group, a sulfonyl group, a linear or branched fluoroalkylene group having 1 to 6 carbon atoms, or a divalent group that has 2 to 6 carbon atoms and to which a linear or branched alkylene group or a linear or branched fluoroalkylene group is liked via an ether bond, and B represents a linear or branched alkylene group having 1 to 6 carbon atoms, a linear or branched fluoroalkylene group having 1 to 6 carbon atoms, or an oxygen atom.

In the formula (2), the alkylene group and fluoroalkylene group can be linear or branched.

For Q in the formula (2), the number of carbon atoms in the alkylene group is preferably 1, 2, 3, 4, or 5. The number of carbon atoms in the fluoroalkylene group is preferably 1, 2, 3, 4, or 5.

For B in the formula (2), the number of carbon atoms in the alkylene group is preferably 1, 2, 3, 4, or 5. The number of carbon atoms in the fluoroalkylene group is preferably 1, 2, 3, 4, or 5.

The content of the cyclic sulfonyl compound represented by the formula (2) in the electrolyte solution is not particularly limited, but the total content of the VC, the FEC, the boron complex of the formula (1), and the cyclic sulfonyl compound in the electrolyte solution is preferably 4.5 mass% or less. That is, the content of the cyclic sulfonyl compound represented by the formula (2) in the electrolyte solution is preferably 0.01 mass% or more and less than 4.5 mass%. When the content of the cyclic sulfonyl compound is 0.01 mass% or more, a sufficient film formation effect can be obtained. When the content of the cyclic sulfonyl compound is 5.0 mass% or less, an increase in the viscosity of the electrolyte solution and a corresponding increase in resistance can be reduced.

The content of the cyclic sulfonyl compound in the electrolyte solution is more preferably 0.05 mass% or more and even more preferably 0.1 mass% or more. The content of the cyclic sulfonyl compound in the electrolyte solution is more preferably 4.0 mass% or less and even more preferably 3.0 mass% or less.

As the cyclic sulfonyl compound represented by the formula (2), there can be used, for example, cyclic sulfonyl compounds represented by the following formulae (2-1) to (2-6).

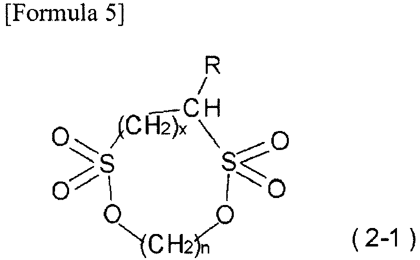

In the formula (2-1), x is 0 or 1, n is 1, 2, 3, 4, or 5, and R represents a hydrogen atom, a methyl group, an ethyl group, or a halogen atom (e.g., a fluorine atom). When x is 0, the sulfur atoms are linked to the adjacent carbon atom via a single bond.

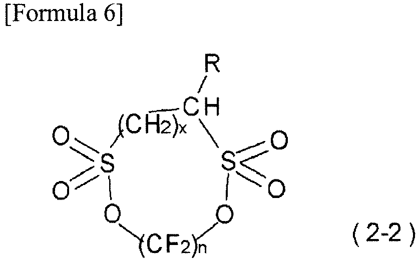

In the formula (2-2), x is 0 or 1, n is 1, 2, 3, 4, or 5, and R represents a hydrogen atom, a methyl group, an ethyl group, or a halogen atom (e.g., a fluorine atom). When x is 0, the sulfur atoms are linked to the adjacent carbon atom via a single bond.

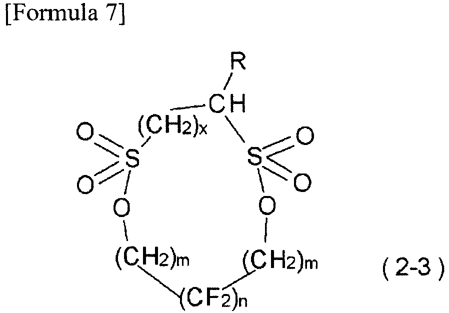

In the formula (2-3), x is 0 or 1, m is 1 or 2, n is 1, 2, 3, or 4, and R represents a hydrogen atom, a methyl group, an ethyl group, or a halogen atom (e.g., a fluorine atom). When x is 0, the sulfur atoms are linked to the adjacent carbon atom via a single bond.

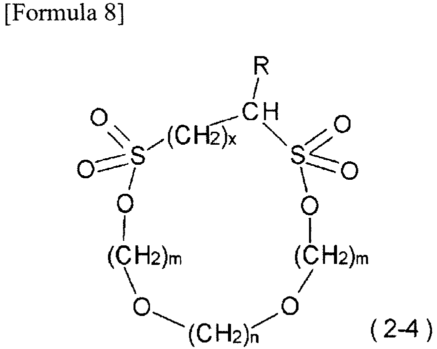

In the formula (2-4), x is 0 or 1. m is 1 or 2, n is 1, 2, 3, or 4, and R represents a hydrogen atom, a methyl group, an ethyl group, or a halogen atom (e.g., a fluorine atom). When x is 0, the sulfur atoms are linked to the adjacent carbon atom via a single bond.

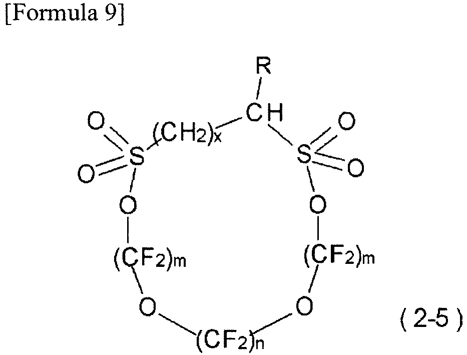

In the formula (2-5), x is 0 or 1, m is 1 or 2, n is 1, 2, 3, or 4, and R represents a hydrogen atom, a methyl group, an ethyl group, or a halogen atom (e.g., a fluorine atom). When x is 0, the sulfur atoms are linked to the adjacent carbon atom via a single bond.

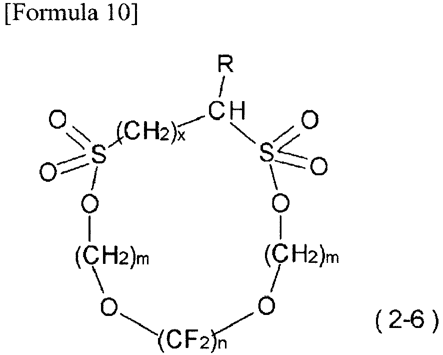

In the formula (2-6), x is 0 or 1, m is 1 or 2, n is 1, 2, 3, or 4, and R represents a hydrogen atom, a methyl group, an ethyl group, or a halogen atom (e.g., a fluorine atom). When x is 0, the sulfur atoms are linked to the adjacent carbon atom via a single bond.

Specific examples of the cyclic sulfonyl compound represented by the formula (2) are listed in Tables 1 and 2. It should be noted that the present invention is not limited to these examples.

**[Table 1]**

| | | | |
|---|---|---|---|
| 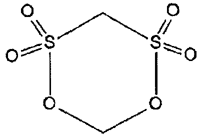 | (101) | 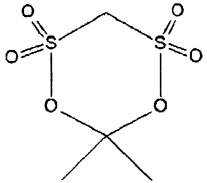 | (107) |
| 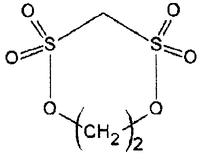 | (102) | 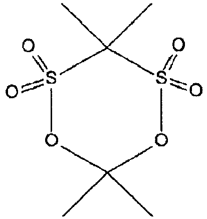 | (108) |
| 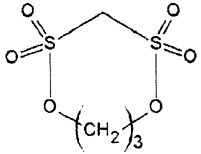 | (103) | 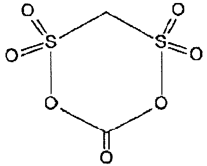 | (109) |
| 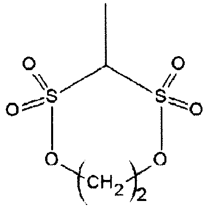 | (104) | 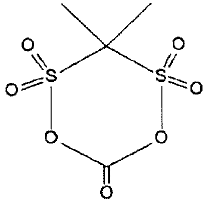 | (110) |
| 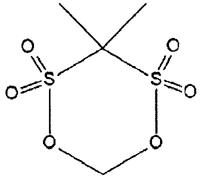 | (105) | | |
| 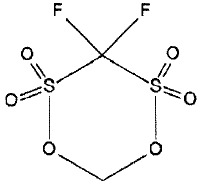 | (106) | 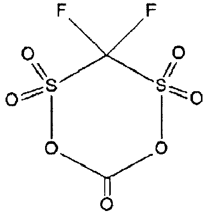 | (111) |

**[Table 2]**

| | | | |
|---|---|---|---|
| 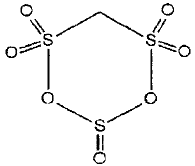 | (112) | 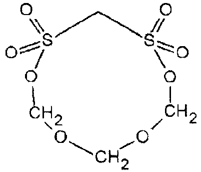 | (118) |
| 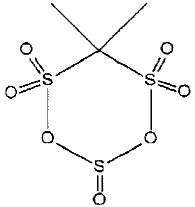 | (113) | 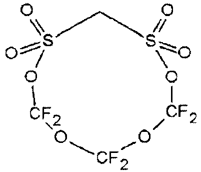 | (119) |
| 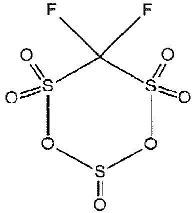 | (114) | 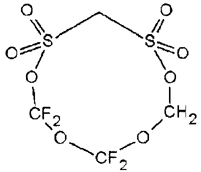 | (120) |
| 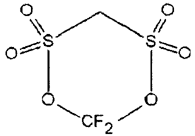 | (115) | 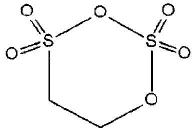 | (121) |
| 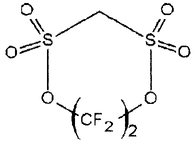 | (116) | 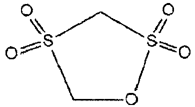 | (122) |
| 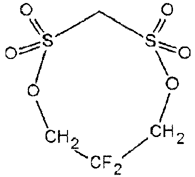 | (117) | | |

The cyclic sulfonyl compound can be produced, for example, using any of production methods described in U.S. Patent No. 4950768 (JP61-501089A and JP5-44946B) and JP2005-336155A.

### [2] Positive electrode

The positive electrode contains a positive electrode active material. The positive electrode active material can be bound on a positive electrode current collector by a positive electrode binder.

In the exemplary embodiment, the positive electrode active material contains a lithium-nickel composite oxide.

The lithium-nickel composite oxide is preferably at least one selected from the group consisting of LiNiO₂, Li₂NiO₂, LiNi₂O₄, Li₂Ni₂O₄, and LiNi₁₋ₓMₓO₂, wherein 0 < x ≤ 0.5 is satisfied and M represents at least one metal element selected from the group consisting of Co, Mn, Al, Fe, Cu, and Sr.

The content of the lithium-nickel composite oxide in the positive electrode active material is preferably 60 mass% or more, more preferably 70 mass% or more, even more preferably 80 mass% or more, and particularly preferably 90 mass% or more. When the content of the lithium-nickel composite oxide in the positive electrode active material is 60 mass% or more, the use of the electrolyte solution according to the exemplary embodiment is likely to result in the formation of a better SEI film.

The positive electrode active material can contain a lithium-manganese composite oxide. The lithium-manganese composite oxide is preferably at least one selected from the group consisting of spinel lithium manganates such as LiMn₂O₄. The content of the lithium-manganese composite oxide in the positive electrode active material is preferably 40 mass% or less.

The positive electrode active material can further contain an active material other than the lithium-nickel composite oxide and lithium-manganese composite oxide.

Materials identical to those mentioned below as negative electrode binders can be used as the positive electrode binder. Among those materials, polyvinylidene fluoride is preferred in terms of utility and cost-effectiveness. The amount of the positive electrode binder is preferably 2 to 10 parts by mass relative to 100 parts by mass of the positive electrode active material.

Materials identical to those mentioned below as negative electrode current collectors can be used as the positive electrode current collector.

To decrease the impedance, a conductive auxiliary agent may be added to the positive electrode active material layer containing the positive electrode active material. Examples of the conductive auxiliary agent include fine particles of carbon materials such as graphite, carbon black, and acetylene black.

### [3] Negative electrode

The negative electrode contains a negative electrode active material. The negative electrode active material can be bound on a negative electrode current collector by a negative electrode binder.

Examples of the negative electrode active material include, but are not limited to, metallic lithium, a metal (a) capable of alloying with lithium, a metal oxide (b) capable of occluding and releasing lithium ions, and a carbon material (c) capable of occluding and releasing lithium ions. The negative electrode active materials can be used alone or in combination with one another.

Examples of the metal (a) include Al, Si, Pb, Sn, In, Bi, Ag, Ba, Ca, Hg, Pd, Pt, Te, Zn, La, and alloys of two or more of these metals. A mixture of two or more of these metals or alloys can be used. These metals or alloys can contain one or more non-metallic elements. Among these metals and alloys, silicon, tin, or an alloy thereof is preferably used as the negative electrode active material. The use of silicon or tin as the negative electrode active material makes it possible to provide a secondary battery excellent in weight energy density and volume energy density.

Examples of the metal oxide (b) include silicon oxide, aluminum oxide, tin oxide, indium oxide, zinc oxide, lithium oxide, and composites thereof. Among these, silicon oxide is preferably used as the negative electrode active material. Additionally, the metal oxide (b) can contain one or more elements selected from nitrogen, boron, and sulfur, for example, in an amount of 0.1 to 5 mass%.

Examples of the carbon material (c) include graphite, non-crystalline carbon, diamond-like carbon, carbon nanotube, and composites thereof.

The negative electrode active material preferably contains the carbon material (c) and more preferably contains graphite. The content of the carbon material (c) in the negative electrode active material is preferably 60 mass% or more. A Si-based material is preferred as another negative electrode active material for use in combination with the carbon material (c).

Examples of the negative electrode binder include, but are not limited to, polyvinylidene fluoride, vinylidene fluoride-hexafluoropropylene copolymer, vinylidene fluoride-tetrafluoroethylene copolymer, styrene-butadiene copolymer rubber, polytetrafluoroethylene, polypropylene, polyethylene, polyimide, polyamideimide, and polyacrylic acid. Among these, polyvinylidene fluoride or styrene-butadiene copolymer rubber are preferred due to their high binding strength. The amount of the negative electrode binder is preferably 0.5 to 25 parts by mass and more preferably 1 to 5 parts by mass relative to 100 parts by mass of the negative electrode active material. Carboxymethyl cellulose can be added as a thickener.

As the negative electrode current collector, aluminum, nickel, stainless steel, chromium, copper, silver, and alloys thereof are preferred in terms of electrochemical stability. Examples of the form of the negative electrode current collector include a foil, flat sheet, and mesh.

The negative electrode can be fabricated by forming on the negative electrode current collector a negative electrode active material layer containing the negative electrode active material and negative electrode binder. Examples of the method for forming the negative electrode active material layer include doctor blade coating, die coating, CVD, and sputtering. The negative electrode can be fabricated by first forming the negative electrode active material layer and then by forming a thin film of aluminum, nickel, or an alloy thereof on the negative electrode active material layer using a method such as vapor deposition or sputtering.

### [4] Separator

The separator is not particularly limited and, for example, a porous film or non-woven fabric of polypropylene or polyethylene can be used. As the separator there can also be used a ceramic-coated separator obtained by forming a ceramic-containing coating on a polymer base available as a separator. A laminate of these separators can also be used.

### [5] Outer Package

The outer package is not particularly limited and, for example, a laminated film can be used. In the case of, for example, a stacked, laminated secondary battery, a laminated polypropylene or polyethylene film with an aluminum or silica coating can be used.

### [6] Secondary battery

Examples of the configuration of the secondary battery include, but are not limited to, a configuration in which an electrode assembly made up of a positive electrode and a negative electrode opposed to each other and an electrolyte solution are packaged by an outer package. Examples of the form of the secondary battery include, but are not limited to, a cylindrical battery, a flat-wound-square battery, a stacked square battery, a coin battery, a flat-wound-laminated battery, and a stacked-laminated battery.

### Examples

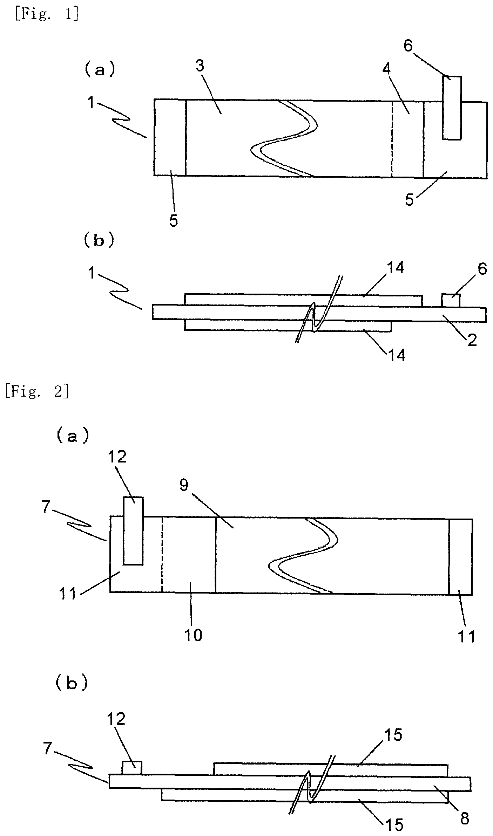

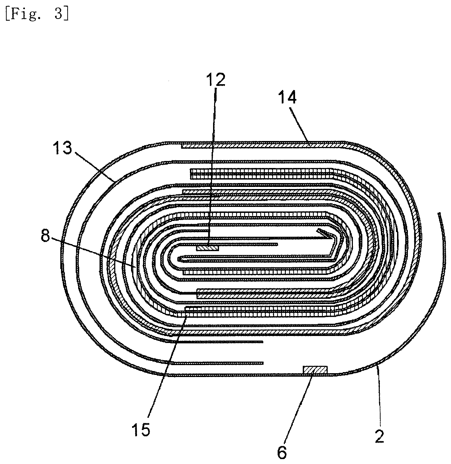

Hereinafter, the present invention will be described in detail by examples with reference to the drawings. It should be noted that the present invention is not limited to the examples. Fig. 1 illustrates the configuration of a positive electrode of a lithium-ion secondary battery. Fig. 1(a) is a plan view of the positive electrode, and Fig. 1(b) is a side view of the positive electrode. Fig. 2 illustrates the configuration of a negative electrode of the lithium-ion secondary battery. Fig. 2(a) is a plan view of the negative electrode, and Fig. 2(b) is a side view of the negative electrode. Fig. 3 illustrates the configuration of a wound electrode assembly of the lithium-ion secondary battery.

### (Example 1)

### <Positive electrode>

Fabrication of the positive electrode will first be described with reference to Fig. 1. A mixture was prepared by mixing 92 mass% of LiNi_{0.5}Co_{0.2}Mn_{0.3}O₂ (abbreviated as LiNiO), 5 mass% of acetylene black as a conductive auxiliary agent, and 3 mass% of polyvinylidene fluoride as a binder, and then N-methylpyrrolidone was added to and mixed with the mixture to prepare a positive electrode slurry. The positive electrode slurry was applied to both surfaces of a 20-µm-thick Al foil 2 serving as a current collector by doctor blade coating and was dried at 120°C for 5 minutes. This was followed by roll press to form 160-µm-thick positive electrode active material layers 14. At both ends of the Al foil there were provided positive electrode active material-uncoated portions 5 where both of the surfaces were uncoated with the positive electrode active material. A positive electrode conductive tab 6 was welded to one of the positive electrode active material-uncoated portions 5, adjacent to which there was provided a single-side-coated portion 4 of the positive electrode active material where only one of the surfaces was coated. A double-side-coated portion 3 of the positive electrode active material was provided in continuity with the single-side-coated portion 4 of the positive electrode active material. In the foregoing manner, a positive electrode 1 was fabricated.

### <Negative electrode>

Next, fabrication of the negative electrode will be described with reference to Fig. 2. A mixture was prepared by mixing 95 mass% of natural graphite (referred to as graphite), 1 mass% of acetylene black as a conductive auxiliary agent, and 4 mass% of polyvinylidene fluoride as a binder, and then N-methylpyrrolidone was added to and mixed with the mixture to prepare a negative electrode slurry. The negative electrode slurry was applied to both surfaces of a 10-µm-thick Cu foil 8 serving as a current collector and was dried at 120°C for 5 minutes. This was followed by roll press to form a 120-µm-thick negative electrode active material layers 15. At both ends of the Cu foil there were provided negative electrode active material-uncoated portions 11 where both of the surfaces were uncoated with the negative electrode active material. A negative electrode conductive tab 12 was welded to one of the negative electrode active material-uncoated portions 11, adjacent to which there was provided a negative electrode active material-single-sided-coated portion 10 where only one of the surfaces was coated. A negative electrode active material-double-sided-coated portion 9 was provided in continuity with the single-side-coated portion 10 of the negative electrode active material-single-sided-coated portion 10. In the foregoing manner, a negative electrode 7 was fabricated.

### <Electrode assembly>

Next, fabrication of the electrode assembly will be described with reference to Fig. 3. Two separators 13, which were microporous polypropylene membranes having a thickness of 25 µm and a porosity of 55%, were welded together and cut into a piece, which was fixedly wound on a winding core of a winding device, into which edges of the positive electrode and the negative electrode were introduced. The edge of the positive electrode was one remote from the portion where the positive electrode conductive tab 6 was joined, while the edge of the negative electrode was one near the portion where the negative electrode conductive tab 12 was joined. The negative electrode was placed between the two separators 13, the positive electrode was placed on top of the separator 13, and they were wound by rotating the winding core to fabricate the electrode assembly.

### <Electrolyte solution>

A mixed solvent of ethylene carbonate (EC) and diethyl carbonate (DEC) (at a volume ratio of 30/70) was used as a non-aqueous solvent. The non-aqueous solvent was mixed with 1.0 mol/L of LiPF₆ as a supporting electrolyte, 1.5 mass% of vinylene carbonate (VC), 1.0 mass% of fluoroethylene carbonate (FEC), and 0.5 mass% of lithium bis(oxalato)borate (LiBOB) as the boron complex of the formula (1) to prepare an electrolyte solution.

### <Lithium-ion secondary battery>

The electrode assembly was placed in an embossed, laminated outer package, and the positive electrode conductive tab and negative electrode conductive tab were led outside of the laminated outer package, one side of which was folded and which was then heat-sealed except for a portion for solution inlet. Next, the electrolyte solution was injected through the solution inlet portion and subjected to vacuum impregnation, and the solution inlet portion was heat-sealed to fabricate a lithium-ion secondary battery.

### <Evaluation>

The lithium-ion secondary battery fabricated was CC-charged up to 3.2 V (constant current charging, charging conditions: CC current of 0.1 C, temperature of 20°C). After that, a portion of the laminate was opened for vacuum defoaming to remove gas generated at the beginning of the charging. Next, the battery was CC-CV charged up to a voltage of 4.2 V (constant current-constant voltage charging, charging conditions: CC current of 0.2 C, CV time of 2 hours, temperature of 20°C). The battery was then discharged to a voltage of 2.5 V at 0.2 C.

Subsequently, a cycle test was carried out. In the cycle test, first, CC-CV charging was performed with the maximum voltage set to 4.2 V, the current set to 1 C, and the CV time set to 1.5 hours. CC discharging was subsequently performed with the minimum voltage set to 2.5 V and the current set to 1 C. This charging/discharging cycle was repeated 1000 times. The cycle test was conducted both at 25°C and at 45°C. The ratio of the discharge capacity in the 1000th cycle to the discharge capacity in the 1st cycle (Discharge capacity in the 1000th cycle/Discharge capacity in the 1st cycle x 100) was determined as a capacity retention ratio.

### (Examples 2 to 8)

Lithium-ion secondary batteries were fabricated and evaluated in the same manner as in Example 1, except that electrolyte solutions were prepared in such a manner that the contents of the VC, the FEC, the LiBOB, and the cyclic sulfonyl compound represented by the above formula (101) which was used as the compound of the formula (2) were adjusted to those shown in Table 3.

### (Examples 9 to 14)

Lithium-ion secondary batteries were fabricated and evaluated in the same manner as in Example 1, except that mixtures of LiNiO and LiMn₂O₄ (abbreviated as LiMnO) at mass ratios shown in Table 3 were used as positive electrode active materials instead of LiNiO, and that electrolyte solutions were prepared in such a manner that the contents of the VC, the FEC, the LiBOB, and the cyclic sulfonyl compound represented by the above formula (101) were adjusted to those shown in Table 3.

### (Comparative Examples 1 to 7)

Lithium-ion secondary batteries were fabricated and evaluated in the same manner as in Example 1, except that electrolyte solutions were prepared in such a manner that the contents of the VC, the FEC, the LiBOB, and the cyclic sulfonyl compound represented by the above formula (101) were adjusted to those shown in Table 3.

The evaluation results are shown in Table 3.
[Table 3]

**Table 3-1**

| | Positive electrode active material | | Negative electrode active material |
|---|---|---|---|
| | LiNiO (mass ratio) | LiMnO (mass ratio) | |
| Example 1 | 100 | 0 | Graphite |
| Example 2 | 100 | 0 | Graphite |
| Example 3 | 100 | 0 | Graphite |
| Example 4 | 100 | 0 | Graphite |
| Example 5 | 100 | 0 | Graphite |
| Example 6 | 100 | 0 | Graphite |
| Example 7 | 100 | 0 | Graphite |
| Example 8 | 100 | 0 | Graphite |
| Example 9 | 90 | 10 | Graphite |
| Example 10 | 75 | 25 | Graphite |
| Example 11 | 60 | 40 | Graphite |
| Example 12 | 90 | 10 | Graphite |
| Example 13 | 75 | 25 | Graphite |
| Example 14 | 60 | 40 | Graphite |
| Comparative Example 1 | 100 | 0 | Graphite |
| Comparative Example 2 | 100 | 0 | Graphite |
| Comparative Example 3 | 100 | 0 | Graphite |
| Comparative Example 4 | 100 | 0 | Graphite |
| Comparative Example 5 | 100 | 0 | Graphite |
| Comparative Example 6 | 100 | 0 | Graphite |
| Comparative Example 7 | 100 | 0 | Graphite |

**Table 3-2**

| | Electrolyte solution | | | | | | Capacity retention ratio | |
|---|---|---|---|---|---|---|---|---|
| | VC (mass%) | FEC (mass%) | Formula (1) [LiBOB] (mass%) | Total content of three substances (mass%) | Formula (2) [Formula (101)] (mass%) | Total content of four substances (mass%) | 25°C (%) | 45°C (%) |
| Example 1 | 1.5 | 1.0 | 0.5 | 3.0 | 0 | - | 93 | 84 |
| Example 2 | 2.5 | 1.0 | 0.5 | 4.0 | 0 | - | 87 | 78 |
| Example 3 | 1.0 | 2.0 | 0.5 | 3.5 | 0 | - | 92 | 83 |
| Example 4 | 1.0 | 1.0 | 0.1 | 2.1 | 0 | - | 85 | 80 |
| Example 5 | 1.0 | 1.0 | 1.0 | 3.0 | 0 | - | 90 | 82 |
| Example 6 | 1.5 | 1.0 | 0.5 | 3.0 | 0.1 | 3.1 | 89 | 80 |
| Example 7 | 1.5 | 1.0 | 0.5 | 3.0 | 0.5 | 3.5 | 90 | 81 |
| Example 8 | 1.5 | 1.0 | 0.5 | 3.0 | 1.5 | 4.5 | 85 | 77 |
| Example 9 | 2 | 1 | 0.5 | 3.5 | 0 | - | 88 | 77 |
| Example 10 | 2 | 1 | 0.5 | 3.5 | 0 | - | 83 | 75 |
| Example 11 | 2 | 1 | 0.5 | 3.5 | 0 | - | 80 | 72 |
| Example 12 | 1.5 | 1 | 0.5 | 3.0 | 0.5 | 3.5 | 92 | 83 |
| Example 13 | 1.5 | 1 | 0.5 | 3.0 | 0.5 | 3.5 | 90 | 81 |
| Example 14 | 1.5 | 1 | 0.5 | 3.0 | 0.5 | 3.5 | 85 | 77 |
| Comparative Example 1 | 0 | 0 | 0 | - | 0 | - | 79 | 69 |
| Comparative Example 2 | 3 | 1 | 0.5 | 4.5 | 0 | - | 75 | 66 |
| Comparative Example 3 | 1 | 3 | 0.5 | 4.5 | 0 | - | 68 | 60 |
| Comparative Example 4 | 1 | 1 | 1.5 | 3.5 | 0 | - | 73 | 64 |
| Comparative Example 5 | 2 | 1.5 | 1 | 4.5 | 0.5 | 5.0 | 70 | 61 |
| Comparative Example 6 | 2.5 | 0 | 0 | 2.5 | 0 | - | 71 | 62 |
| Comparative Example 7 | 0 | 2 | 0 | 2.0 | 0 | - | 73 | 64 |

### Examples 15 to 18 and Reference Examples 1 to 3

Lithium-ion secondary batteries were fabricated and evaluated in the same manner as in Example 7, except that the negative electrode active material was changed from natural graphite to combinations of natural graphite and SiO at mass ratios shown in Table 4. The evaluation results are shown in Table 4.

**[Table 4]**

| | Negative electrode | | Capacity retention ratio | |
|---|---|---|---|---|
| | Graphite (mass ratio) | SiO (mass ratio) | 25°C (%) | 45°C (%) |
| Example 15 | 95 | 5 | 87 | 76 |
| Example 16 | 80 | 20 | 85 | 74 |
| Example 17 | 70 | 30 | 82 | 70 |
| Example 18 | 60 | 40 | 77 | 68 |
| Reference Example 1 | 50 | 50 | 55 | 43 |
| Reference Example 2 | 20 | 80 | 51 | 35 |
| Reference Example 3 | 0 | 100 | 48 | 34 |

### Industrial Applicability

The lithium-ion battery according to the exemplary embodiment can be used, for example, in the following applications: devices for driving such as electric automobiles, plug-in hybrid automobiles, electric motorcycles, or power-assisted cycles; industrial tools such as electric tools; electronic devices such as portable terminals and notebook personal computers; and storage batteries of such as household electricity storage systems or solar photovoltaic systems.

Although the present invention has been described hereinabove with reference to an exemplary embodiment (and examples), the present invention is not limited to the above-described exemplary embodiment (and examples). The configuration and details of the present invention are open to various modifications within the scope of the present invention that will be clear to one of ordinary skill in the art.

This application claims the benefits of priority based on Japanese Patent Application No. 2014-256840 filed on December 19, 2014 and incorporates herein all of the disclosures of that application.

### Reference Signs List

1: Positive electrode
2: Al foil
3: Double-side-coated portion of positive electrode active material
4: Single-side-coated portion of positive electrode active material
5: Positive electrode active material-uncoated portion
6: Positive electrode conductive tab
7: Negative electrode
8: Cu foil
9: Double-side-coated portion of negative electrode active material
10: Single-side-coated portion of negative electrode active material
11: Negative electrode active material-uncoated portion
12: Negative electrode conductive tab
13: Separator
14: Positive electrode active material layer
15: Negative electrode active material layer

## Claims

1. A lithium-ion secondary battery comprising: a positive electrode comprising a positive electrode active material; and an electrolyte solution comprising a supporting electrolyte and a non-aqueous solvent, wherein
the positive electrode active material comprises a lithium-nickel composite oxide,
the electrolyte solution further comprises vinylene carbonate (VC), fluoroethylene carbonate (FEC), and a boron complex of the following formula (1): 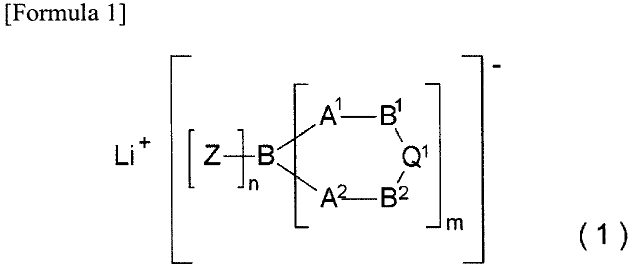 the content of the VC in the electrolyte solution is more than 0 mass% and 2.5 mass% or less,
the content of the FEC in the electrolyte solution is more than 0 mass% and 2.0 mass% or less,
the content of the boron complex of the formula (1) in the electrolyte solution is more than 0 mass% and 1.0 mass% or less,
the total content of the VC, the FEC, and the boron complex of the formula (1) in the electrolyte solution is less than 4.5 mass%, and
in the formula (1),
Z represents a halogen atom, a substituted or unsubstituted alkyl group having 1 to 10 carbon atoms, a polyfluoroalkyl group having 1 to 10 carbon atoms, a substituted or unsubstituted cyclic hydrocarbon having 4 to 20 carbon atoms, or XR¹, wherein X represents an oxygen atom, a sulfur atom, or NR², R² represents a hydrogen atom or a substituted or unsubstituted alkyl group having 1 to 10 carbon atoms, and R¹ represents a substituted or unsubstituted cyclic hydrocarbon having 4 to 20 carbon atoms,
A¹ and A² each independently represent an oxygen atom or a sulfur atom, or A¹ and A² respectively represent NR³ and NR⁴, wherein R³ and R⁴ each independently represent a hydrogen atom, a halogen atom, a substituted or unsubstituted alkyl group having 1 to 10 carbon atoms, a polyfluoroalkyl group having 1 to 10 carbon atoms, or a substituted or unsubstituted cyclic hydrocarbon having 4 to 20 carbon atoms, and R³ and R⁴ are optionally linked together to form a ring structure,
B¹ and B² each independently represent a carbonyl group, a substituted or unsubstituted alkylene group, or a polyfluoroalkylene group,
Q¹ represents a methylene group or a single bond,
m represents 1 or 2,
n represents 0 or 2, and
2m + n = 4.

2. The lithium-ion secondary battery according to claim 1, wherein the boron complex of the formula (1) is a lithium bis(oxalato)borate of the following formula (1A):

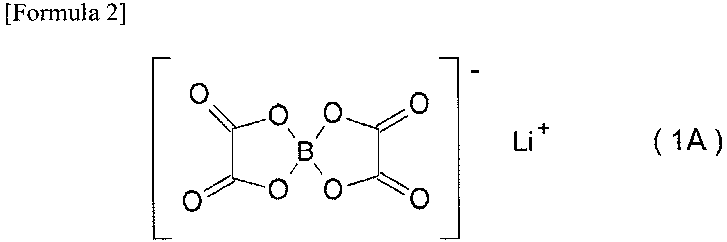

3. The lithium-ion secondary battery according to claim 1 or 2, wherein
the electrolyte solution further contains a cyclic sulfonyl compound represented by the following formula (2): 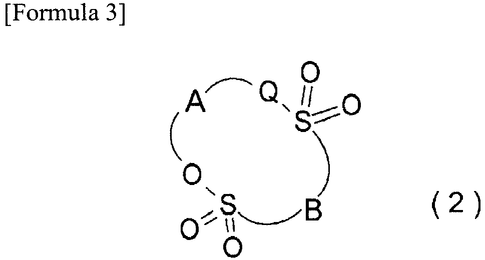 the total content of the VC, the FEC, the boron complex of the formula (1), and the cyclic sulfonyl compound of the formula (2) in the electrolyte solution is 4.5 mass% or less, and
in the formula (2),
Q represents an oxygen atom, a methylene group, or a single bond,
A represents a linear or branched alkylene group having 1 to 6 carbon atoms, a carbonyl group, a sulfinyl group, a sulfonyl group, a linear or branched fluoroalkylene group having 1 to 6 carbon atoms, or a divalent group having 2 to 6 carbon atoms to which a linear or branched alkylene group or a linear or branched fluoroalkylene group is liked via an ether bond, and
B represents a linear or branched alkylene group having 1 to 6 carbon atoms, a linear or branched fluoroalkylene group having 1 to 6 carbon atoms, or an oxygen atom.

4. The lithium-ion secondary battery according to claim 3, wherein the content of the cyclic sulfonyl compound in the electrolyte solution is 0.01 mass% or more and less than 4.5 mass%.

5. The lithium-ion secondary battery according to any one of claims 1 to 4, wherein the lithium-nickel composite oxide is at least one selected from the group consisting of LiNiO₂, Li₂NiO₂, LiNi₂O₄, Li₂Ni₂O₄, and LiNi₁₋ₓMₓO₂, wherein 0 < x ≤ 0.5 is satisfied and M represents at least one metal element selected from the group consisting of Co, Mn, Al, Fe, Cu, and Sr.

6. The lithium-ion secondary battery according to any one of claims 1 to 5, wherein the content of the lithium-nickel composite oxide in the positive electrode active material is 60 mass% or more.

7. The lithium-ion secondary battery according to any one of claims 1 to 6, wherein
the positive electrode active material further contains a lithium-manganese composite oxide, and
the content of the lithium-manganese composite oxide in the positive electrode active material is 40 mass% or less.

8. The lithium-ion secondary battery according to claim 7, wherein the lithium-manganese composite oxide comprises at least one selected from the group consisting of spinel lithium manganates.

9. The lithium-ion secondary battery according to any one of claims 1 to 8, comprising a negative electrode containing a carbon material as a negative electrode active material.

10. The lithium-ion secondary battery according to claim 9, wherein the content of the carbon material in the negative electrode active material is 60 mass% or more.

11. The lithium-ion secondary battery according to claim 9 or 10, wherein the carbon material is graphite.
